# EUROPEAN PATENT SPECIFICATION

(11) **EP 2 489 113 B1**
(45) Date of publication and mention of the grant of the patent: **12.11.2014**
(21) Application number: 10760523.0
(22) Date of filing: 15.09.2010
(51) Int. Cl.: H02K 1/32, H02K 9/19

(54) **THERMALLY MANAGEABLE SYSTEM AND ELECTRIC DEVICE**
THERMISCH REGELBARES SYSTEM UND ELEKTROGERÄT
SYSTÈME THERMIQUEMENT GÉRABLE, ET DISPOSITIF ÉLECTRIQUE

(30) Priority: 23.12.2009 US 646361; 18.10.2009 US 252674 P
(43) Date of publication of application: 22.08.2012
(73) Proprietor: General Electric Company, Schenectady, NY 12345 (US)
(72) Inventor: RIVERA, Ernesto, Camilo, Lawrence Park PA 16531-0001 (US); KOSTRUBANIC, James, Lawrence Park PA 16531-0001 (US)
(74) Representative: Illingworth-Law, William Illingworth
(86) International application number: PCT/US2010/048861
(87) International publication number: WO 2011/046699

(56) References cited:
- EP-A1- 1 953 896
- CH-A- 215 755
- FR-A- 720 462
- GB-A- 337 334
- JP-A- 9 163 682
- JP-A- 2002 325 394

## Description

This application claims priority to U.S. Provisional Application Serial No. 61/252674, filed October 18, 2009.

### BACKGROUND

### Technical Field

Embodiments of the invention may relate to a thermally manageable system for an electrically powered device, assembly, or apparatus. Embodiments of the invention may relate to the thermally manageable electrically powered device or assembly.

### Discussion of Art

Electrical devices have set conditions under which they function at optimum levels. Deviation from these conditions can cause the device to run at relatively lower efficiency. Under some circumstances, the devices may be damaged or can cease to function entirely.

Electric devices, such as an electric motor or an electric generator, may produce heat during use. The thermal energy generated during use, via friction or electrical resistance, may be dissipated or removed to maintain an operating temperature in a desired range. Where the thermal load is greater than the ability of the system to dissipate or remove heat, the system may be derated, operated at relatively lower efficiency, damaged, or shut down.

Currently, thermal loads may be removed through convection, conduction, or radiation. In some systems, such as electric motors and electric generators, forced air or liquid channels may be used to remove heat from the system. The liquid channels may be located in the stator and/or in the rotor. Several flow paths for these channels have been tried to address difficulties in the manufacture or use of such liquid cooled systems. The manufacture and use of such systems is the subject of ongoing development efforts. One method includes the use of a tube, which may be stationary as opposed to the moving rotor shaft, that extends into the shaft of the rotor. The tube defines at least a portion of the flow path for coolant that can flow therethrough.

The document EP 1 953 896 discloses a rotor for an electric machine for improving the cooling performance of the electric machine with through-holes in the outer periphery of the rotor core.

It may be desirable to have a thermally manageable system, or a device, assembly, or apparatus that structurally and/or functionally differs from those that are currently available.

### BRIEF DESCRIPTION

In one embodiment, a thermally manageable system according to claim 1 is provided. The system includes a first segment, a second segment, and a third segment. The first segment is elongate, defining an axis, and has a proximate first end and a distal second end. The first segment has one or both of an outward facing surface that defines a plurality of channels, and an inward facing surface that defines a plurality of apertures; in either case the channels and/or apertures extend axially from about the first end to about the second end of the first segment. The plurality of channels or the plurality of apertures defines at least a portion of a flow path. The first segment has a first mating surface at or near the first end and a second mating surface at or near the second end. The second segment has a mating surface that is securable to the mating surface of the first segment first end. The third segment has a mating surface that is securable to the first segment second end mating surface. Further, the third segment has an ingress and an egress for a fluid that each communicate with at least a respective one of the plurality of channels or the plurality of apertures. The first, second, and third segments are capable of being secured to form a rotatable shaft that is subjectable to a thermal load, and the flow path is configured to direct a flow of the fluid to manage or control the thermal load to which the rotatable shaft is subject.

In one embodiment, a motor or generator assembly is provided that includes a rotor and a stator in operable communication with the rotor. The rotor includes a first segment secured to, at opposing ends, a second segment and a third segment. The first segment is elongate, defining an axis, and has a proximate first end and a distal second end. The first segment has one or both of an outward facing surface that defines a plurality of channels, and an inward facing surface that defines a plurality of apertures; in either case the channels and/or apertures extend axially from about the first end to about the second end of the first segment. The plurality of channels or the plurality of apertures defines at least a portion of a flow path. The first segment has a first mating surface at or near the first end and a second mating surface at or near the second end. The second segment has a mating surface that is secured to the mating surface of the first segment first end. The third segment has a mating surface that is secured to the first segment second end mating surface. Further, the third segment has an ingress and an egress for a fluid that each communicate with at least a respective one of the plurality of channels or the plurality of apertures. The first, second, and third segments are capable of being secured to form a rotatable shaft that is subjectable to a thermal load, and the flow path is configured to direct a flow of the fluid to manage or control the thermal load to which the rotatable shaft is subject.

### BRIEF DESCRIPTION OF THE DRAWINGS

Embodiments of the invention can be more easily understood and the further advantages and uses thereof more readily apparent, when considered in view of the following detailed description when read in conjunction with the following figures, wherein:
Fig. 1A is a schematic diagram showing a side view of an assembly that includes one or more embodiments of the invention; and portions have been shown in cross-sectional cutaway view to illustrate internal features of the assembly;
Fig. 1B is a perspective view of the assembly shown in Fig. 1A;
Fig. 1C is a schematic diagram of the assembly of Figs. 1A and 1B in the context of use as a rotor in an electrical device, and further illustrating the electrical device in use with an optional sensor system;
Fig. 2A is a schematic diagram showing a side view of a component of the assembly shown in Figs. 1A and 1B;
Fig. 2B is a perspective view of the component shown in Fig. 2A;
Figs. 2C-2D are opposing schematic end views of the component shown in Fig. 2A;
Fig. 3A is a schematic diagram showing a side view of a component of the assembly shown in Figs. 1A and 1B, and a portion has been shown in cross-sectional cutaway view to illustrate internal features of the assembly;
Fig. 3B is a perspective view of the component shown in Fig. 3A;
Fig. 4A is a schematic diagram showing a side view of a component of the assembly shown in Figs. 1A and 1B, and several internal features, otherwise hidden from view, are indicated using dashed lines;
Fig. 4B is a perspective view of the component shown in Fig. 4A;
Fig. 5A is a schematic exploded diagram of a plate structure assembly in relation to the component of Figs. 2A-2D, according to an embodiment of the invention;
Figs. 5B-5E are cutaway schematic views of alternative embodiments of a plate structure and/or first segment/second segment interface or junction;
Fig. 6 is a schematic diagram of fluid flow through the assembly of Figs. 1A-1B, according to an embodiment of the invention; and
Figs. 7A-7C are various views of an assembly that includes one or more embodiments of the invention.

### DETAILED DESCRIPTION

Embodiments of the invention may relate to a thermally manageable system for an electrically powered device, assembly, or apparatus. Embodiments of the invention may relate to the thermally manageable electrically powered device or assembly, and one or more associated methods. The assembly may be useful as a rotor in an electric device. Embodiments of the invention are directed to an electrical device that includes such a rotor.

As used herein, the term "electrical device" includes both motors and generators unless context or language indicates otherwise. A motor is an electric motor, which uses electrical energy to produce mechanical work via rotation. The electrical device may be used as a generator or dynamo in the instance where mechanical work via rotation is the input, and electrical energy is the output.

In one embodiment, a thermally manageable system includes a first segment, a second segment, and a third segment (e.g., each segment may be a body or part of a body formed at least in part from one or more solid materials). The first segment is elongate and defines an axis. The first segment has a proximate first end and a distal second end. The first segment has an outward facing surface that defines a plurality of channels and/or an inward facing surface that defines apertures; in either case, the channels or apertures extend axially from about the first end to about the second end of the first segment to define at least a portion of a flow path. The first segment also has a first mating surface at or near the first end and a second mating surface at or near the second end. The second segment has a third mating surface that is securable to the mating surface of the first segment first end (i.e., the first mating surface). The third segment has a fourth mating surface that is securable to the first segment second end mating surface (i.e., the second mating surface). The third segment also has at least a portion of a surface that can communicate with one or more of the first segment apertures and to extend the flow path when the first segment is secured to the third segment.

The first segment, in one example, can be a shaft, and the second segment can be a cap that affixes to one end of the shaft, and the third segment can be a sealing structure that attaches to the other end of the shaft. Together they can be assembled to form a rotor for use in an electrical device (motor or generator). The rotor can be fluid cooled. Suitable fluids include water, anti-freeze, hydrocarbons, and the like. The water can be pure, or can be saltwater or brine. The fluid can be a coolant, and in at least one embodiment the coolant can include additives such as flow modifiers, corrosion resistors, anti-sludge, anti-foul, and anti-scale materials, and the like. In one embodiment the rotor can be a totally enclosed water-cooled (TEWC) motor. In one embodiment, the fluid is a lubricant. Suitable lubricants include oil-based materials.

The cap can be the working end to transmit torque to and from the shaft. The sealing structure can secure to a rotary seal apparatus. Suitable rotary seal apparatus can be commercially obtained from, for example, Barco USA (Cary, Illinois) and Deublin Company (Waukegan, Illinois). That is, the third segment may have at least a portion of a surface that is configured to secure to the rotary union seal.

After securing the first segment to the second and third segments, the fluid may be urged along the flow path to travel from the third segment through the first segment, then through the second segment, then again through the first segment, and then again through the third segment. The fluid can be pumped, gravity fed, or otherwise urged through the flow path. During travel along the flow path, the fluid can, in one embodiment, pick up thermal energy or heat and carry that heat out of the system.

In one embodiment, the first, second, and third segments are weldable. That is, the second and third segments can be secured to respective ends of the first segment via welding at the respective mating surfaces. Other methods of securing include rivets, bolts, friction welding or friction/interference fits, and the like.

In one embodiment, the second segment has a female sleeve portion and the first segment first end has a male portion that is configured to be received in the sleeve portion of the second segment. The mating surfaces of the first segment and the second segment can contact each other when the first and second segments are received together in an assembled form. The mating surfaces are proximate a distal portion of the second segment sleeve portion. The outward facing surface of the male portion (of the first segment) and the inward facing surface of the sleeve portion (of the second segment) can be tapped so as to be able to screw the first segment to the second segment, and the screw threads are wound such that during use of the system as a rotor, torque provided through the second segment tightens the connection of the first and second segments.

In an embodiment, the second end of the first segment has a female sleeve portion and the third segment has a male portion that is configured to be received in the sleeve portion of the second end of the first segment. (That is, in an embodiment the first segment has a male portion at its first end and a female sleeve portion at this second end.) The mating surface of the first segment second end (i.e., the second mating surface) and the mating surface of the third segment (i.e., the fourth mating surface) can contact each other when the first and third segments are received together in an assembled form.

With regard to the plurality of apertures, those that extend through the first segment can be an even numbered plurality of apertures. And, half of the plurality can define a portion of the flow path for flow of a fluid therethrough axially in one direction, and the other half can define a portion of the flow path for flow of the fluid therethrough axially in an opposite direction.

Alternatively or additionally, if there are grooves, troughs, or other channels present instead of or in addition to the apertures, each of the plurality of channels is defined by the outward facing surface of the first segment. These channels can be milled (or otherwise cut or machined), cast, or otherwise formed into the shaft length. Each of the channels can, in one embodiment, define a spiral that turns in a defined direction relative to the direction the rotor rotates during a power generation mode while used in a generator. For embodiments that include such channels, a shaft sleeve is provided that can fit over and around shaft to close off an open side of each of the channels to further define portions of the flow path. For those embodiments that have apertures, in addition to or in place of channels, the apertures can be drilled or machined. Or, the shaft can be cast with the apertures in place. For the apertures, generally, each of the plurality of apertures is about linear.

In one embodiment, a coating or layer is disposed along the flow path for protecting the first, second, and/or third segments from corrosion, pitting, abrasion, scoring, fouling, scaling, or wear, and/or for facilitating or modifying a flow of fluid that travels along the flow path.

With regard to how the apertures (and channels) can communicate with each other to provide an extended flow path that runs the length of the shaft, and then turns to exit from the side that the fluid enters on, the ends of the shaft can be machined, milled, or otherwise fabricated to complete the fluidic circuit. In one embodiment, the first segment can have at least a portion of a surface at an end that defines an end groove, end channel, or end aperture, referred to collectively as "end grooves" for convenience, that allows fluid communication between two or more of the first segment apertures. Each of these end grooves connects two or more of the apertures that extend through the shaft. These end grooves extend the flow path to create a first flow path portion in one axial direction, a redirection of the flow path direction at the end groove or end channel defined at the first segment end, and a second flow path portion in a different direction than the first flow path portion through another of the first segment apertures.

The ends of the shaft, or first segment, can be inset or reverse milled to provide for more surface area to increase system strength and integrity and to reduce the likelihood of leakage. Similarly, the end grooves can be milled out and fitted with a plate structure or other sealing structure. One embodiment includes a plate structure that can be secured to an end groove to seal the flow path. The plate structure can either reside in the end groove, or can sit between the first and second segments (or the first and third segments, respectively), and one or both of the first and second segments can be machined, milled, cast, or otherwise formed so as to accommodate the presence of the plate structure. These plate structures can cover the end groove to seal the flow path. Optionally, one plate structure can cover a plurality of end grooves if such are present so as to seal all of the portions of the flow path or flow paths. Individual plate structures for each end groove can allow for integrity testing of the sealing function prior to securing the second and third segments to appropriate ends of the shaft. Naturally, the ingress and egress flow paths for the third segment (and corresponding apertures or channels for the first segment) may not be sealed to allow for the flow of fluid through the fluidic circuit defined by the flow path. Selection of material for the plate structure may take into account that it, rather than the second segment (and at least portions of the first segment) may contact the fluid that flows through the flow path. As such, there may be a reduced need to treat, coat, or otherwise protect those segment portions that do not contact the fluid during use.

In one embodiment, the second segment has at least a portion of a surface that defines an end groove or end channel that is configured to communicate with two or more of the first segment apertures (and/or one or more end grooves formed in the first segment), and further configured to allow fluid communication between the two or more of the first segment apertures (and/or first segment end grooves) and to extend the flow path to create a first flow path portion in one axial direction, a redirection of the flow path direction at the end groove or end channel defined at the first segment end, and a second flow path portion in a different direction than the first flow path portion through another of the first segment apertures. As disclosed above, the system may further include one or more plate structures that can be secured to the end groove or end channel to seal the flow path, and the plate structure is configured to either reside in the end groove or end channel, or that can cover the end groove or end channel to seal the flow path, and optionally cover a plurality of end grooves or end channels if such are present so as to seal all of the portions of the flow path or flow paths.

The second segment can receive all the torque from external to the system and transmit at least a portion of that torque load to the first segment while acting as a generator (converting mechanical to electrical energy). Similarly, the second segment can transmit the entire torque load from internal to the system out to the mechanical load while acting as a motor (converting electrical to mechanical energy). Because of the torque load transfer, the second segment may be formed from a material that is or has, relative to a first segment material and different therefrom, of a higher tensile strength, higher degree of difficulty in welding, higher yield strength, or higher temperature deflection point.

With further regard to the materials contemplated for use in the system, at least one of the first, second, or third segments comprises steel, and the steel is a high-carbon steel, low-carbon steel, stainless steel, or alloy steel. Environment, performance requirements, and application demands may affect material choices.

The first segment and/or the third segment define one or more end channels or end grooves, and the end channels or end grooves are configured to allow for fluid communication, after assembly, between two or more apertures or channels of the first segment and therefore define at least one or more portions of the flow path. As disclosed hereinabove, the third segment can secure to a rotary union seal and can define an ingress and an egress for fluid to the flow path. While weldable embodiments are envisioned, the third segment can be secured by bolting or another fastener instead.

In one embodiment, the third segment is free of a tube and provides a flow path for fluid to the apertures or channels defined by the first segment. That is, the configuration does not have a hollow feeder tube that secures to the sealing device and extends into the shaft of the rotor. Thus, the first segment is free of a tube, or the first segment apertures (and/or channels) define the only flow paths through the first segment.

A motor or generator assembly is provided in one embodiment. The first, second, and third segments form a rotor for use in an electric device when secured through their respective mating surfaces. The motor or generator assembly further includes a stator that is in operable communication with the rotor.

Suitable motors that can include embodiments of the invention include those in which the motor is a direct current (DC) motor and in which the motor is an alternating current (AC) motor or a switched-reluctance motor. In an exemplary embodiment, the motor is a squirrel cage induction motor. The motor can be a permanent magnet motor and include one or more permanent magnets.

Applications finding use for embodiments of the invention include those where the motor has a horsepower rating of greater than 1000 horsepower (HP), greater than 2000 HP, or greater than 3000 HP. And, the applications include those where the motor has a power to weight ratio of greater than 0.182 horsepower per pound (HP/lb).

The assembly can include a sensor system. The sensor system can sense one or more operational parameters or other parameters selected from temperature, torque, pressure, speed, location, lubricity/lubrication quality, lubricant metal content, electromagnetic interference (EMI) profile, vibration, water content, or pressure. The sensor system can communicate the sensed parameter, or information indicative thereof, to a control unit. The control unit can be proximate the assembly, or the control unit can be located remote from the assembly. The sensed parameter, or information related thereto, can be communicated to a data center whereupon diagnostic and/or prognostic analysis is performed based on the sensed parameter information. A corrective action is controllably initiated in response to the sensed parameter being in, or outside of, a determined range of values.

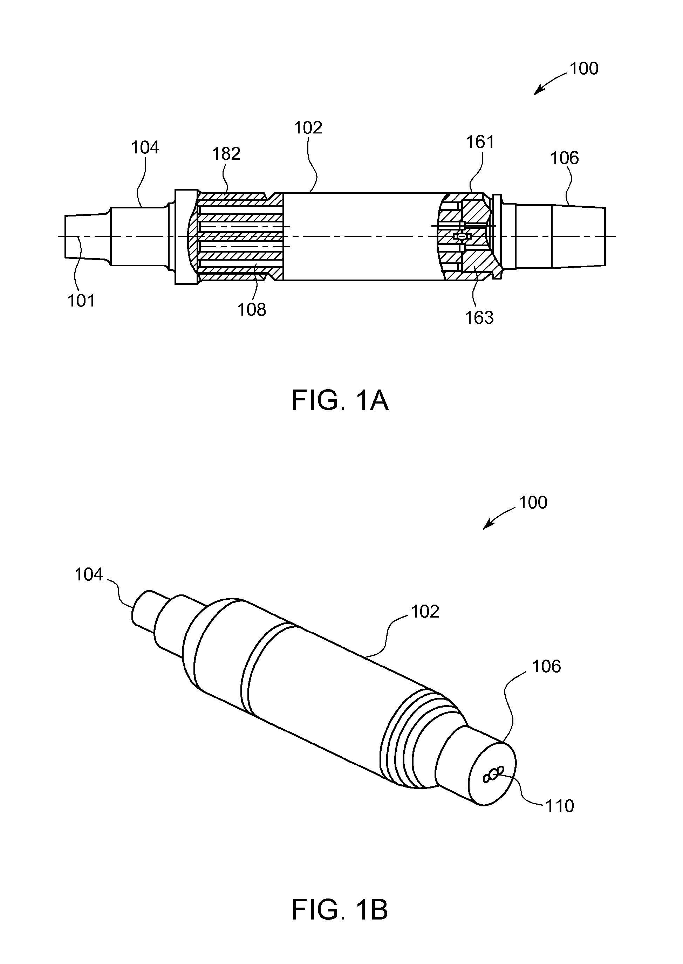

With reference to Figs. 1A and 1B, a thermally manageable system 100 according to an embodiment of the invention is shown. The system defines a longitudinal axis 101. The system includes a first segment 102, a second segment 104, and a third segment 106, which in these views are shown assembled together. As noted above, each segment may be a body or part of a body formed at least in part from one or more solid materials. The system is shown in partial cutaway cross-sectional view (Fig. 1A) to reveal a plurality of apertures 108 extending axially through the shaft of the first segment (for clarity, only one aperture has a lead line in Fig. 1A). Fig. 1B is a perspective view that details an end of the system to show a set of ingress/egress holes (e.g., extending through the third segment 106), as indicated by reference number 110.

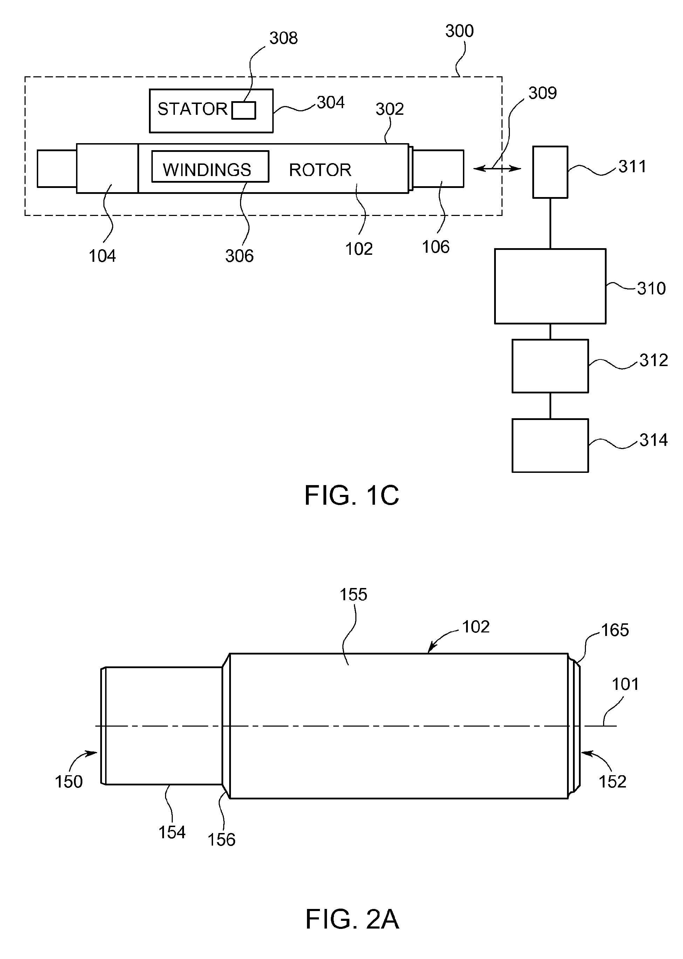

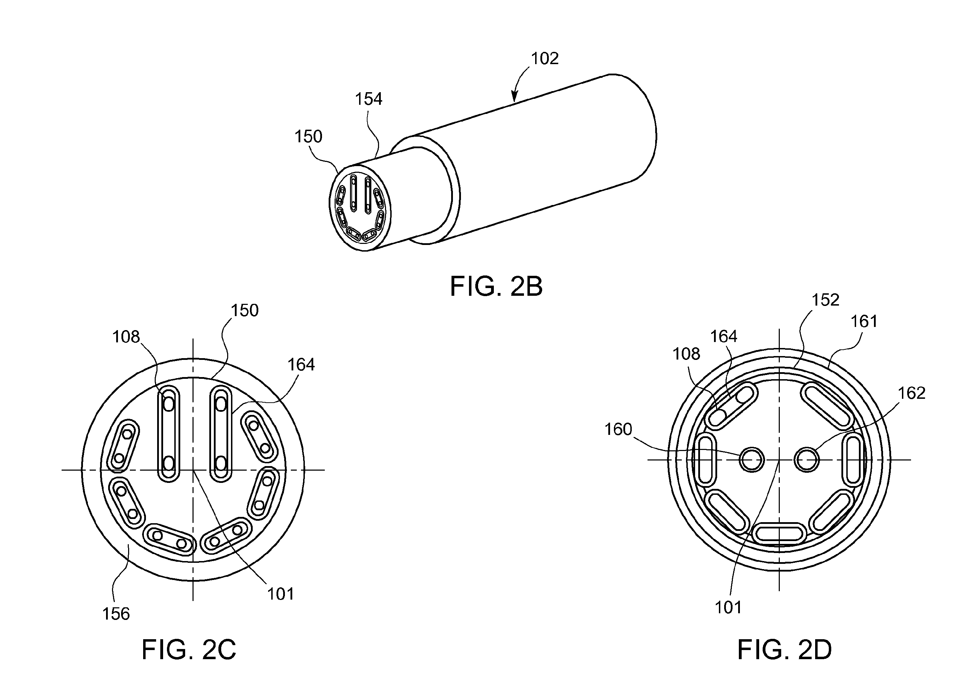

Figs. 2A-2D disclose the first segment 102 of Figs. 1A and 1B in more detail. With regard to Fig. 2A, a schematic side view of the first segment 102 reveals the first end 150 and the second end 152, and the male portion 154 of the first end 150. The mating surface of the first end 150 (i.e., the first mating surface) is indicated in the illustrated embodiment at reference number 156. In an embodiment, the male portion 154 and the center portion 155 of the first segment are each cylindrical, with the male portion 154 having a smaller/reduced diameter than the center 155; in this embodiment, the mating surface 156 may comprise a frustoconical surface transitioning between the male portion and the center portion of the first segment. For Fig. 2B, a perspective view shows more detail about the first end 150, and that end's side view in Fig. 2C shows an end groove 164, which is one of a plurality of such end grooves shown, and only one is indicated with a reference number, and only a few of the apertures 108 are indicated, for clarity. Naturally, each of the end grooves 164 has at least two apertures opening thereinto. That is, as noted above, each end groove 164 connects two or more of the apertures 108 that extend through the first segment shaft for allowing fluid communication between the connected apertures.

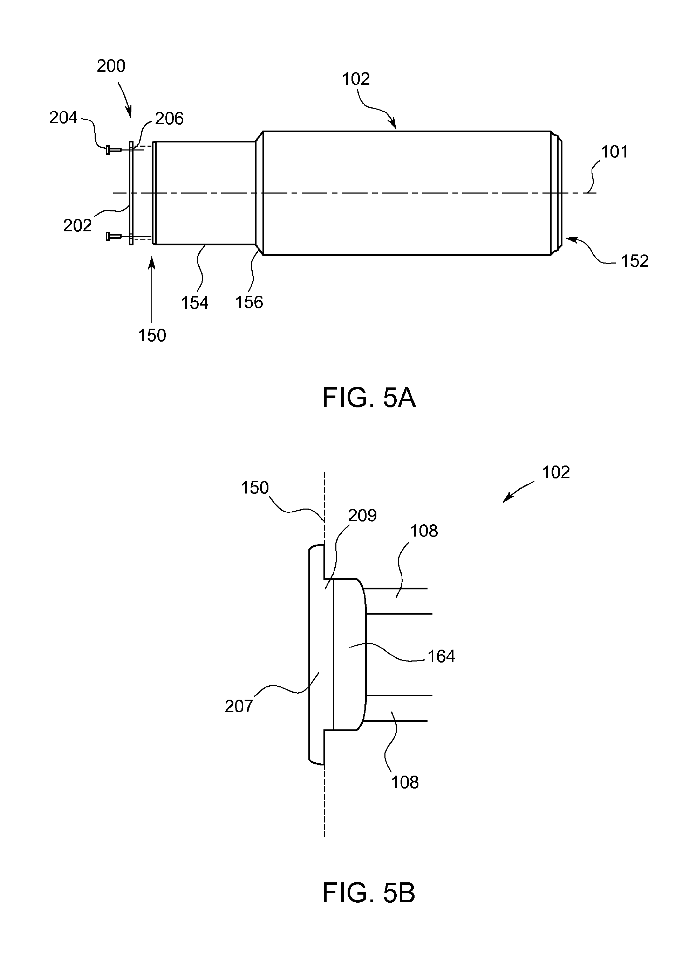

Flow communication of connected apertures as through an end groove may be effected when the first end 150 of the first segment 102 is assembled to the second segment 104, through an abutting relation between the first and second segments 102, 104, and/or it may be effected through provision of a plate structure attached to the first segment 102. Fig. 5A is a side view an example plate structure assembly 200 in relation to the first segment 102. In an embodiment, the plate structure assembly 200 comprises a plate structure 202 and a plurality of fasteners 204. The plate structure 202 is provided with fastener apertures 206 each dimensioned to accommodate one of the fasteners 204. For assembly, the plate structure 202 is brought into contact with the first end 150 of the first segment 102, and thereby abuts the first end 150 and covers the end grooves 164. The fasteners 204 are then inserted through the fastener apertures 206 for attachment of the plate 202 to the first segment 102. The first end 150 of the first segment 102 may be provided with fastener receptacles (not shown) for receiving the fasteners. As an example, the fasteners may be threaded bolts. In an embodiment, the plate structure 202 can be secured to the end 150 of the first segment 102 to cover a plurality of grooves, channels, or apertures defined by the surface of the end of the first segment (i.e., the grooves, channels, or apertures are end grooves), so as to seal all of the portions of the fluid flow path or flow paths defined by the grooves, channels, or apertures.

In another embodiment, with reference to Fig. 5B, a plate structure 207 can be secured to the end 150 of the first segment 102 to seal the flow path at a groove, channel, or aperture 164 defined by the surface of first segment end 150 (i.e., an end groove). The plate structure 207 is configured to at least partially reside in the groove, channel, or aperture 164. In the example shown in Fig. 5B, the plate structure 207 includes an extension portion 209 that corresponds in perimeter shape to the groove, channel, or aperture 164 and that extends partially into the groove, channel, or aperture for sealing purposes.

Fig. 2D is a side view of the second end 152, and in which the ingress/egress apertures 160, 162, which are otherwise similar to any of the other apertures, are shown as relatively less radially distant than the other apertures 108. (For clarity, only some of the apertures 108 are shown in Fig. 2D; however, there may be two or more apertures 108 associated with each end groove 164.) These two ingress/egress apertures 160, 162 are the first and last portions of the flow path in the first segment, and they are able to mate with corresponding apertures 190, 192 in the third segment 106. The second end 152 includes end grooves 164, which are similar in function and purpose too the grooves 164 of the first end 150, as described above. In an embodiment, the second end 152 has a female sleeve portion 161. The female sleeve portion 161 of the first segment 102 is dimensioned to accommodate a male portion 163 of the third segment 106, e.g., as shown in Fig. 1A. For example, the male portion 163 of the third segment may be cylindrical, and the female sleeve portion 161 of the first segment may include a cylindrical bore or opening having an inner diameter that is slightly larger than a diameter of the third segment male portion, for receiving and accommodating the male portion. The mating surface 165 of the first segment 102 second end 152 (i.e., the second mating surface) and the mating surface 196 of the third segment 106 (i.e., the fourth mating surface 196) can contact each other when the first and third segments are received together in an assembled form, e.g., as shown in Fig. 1A.

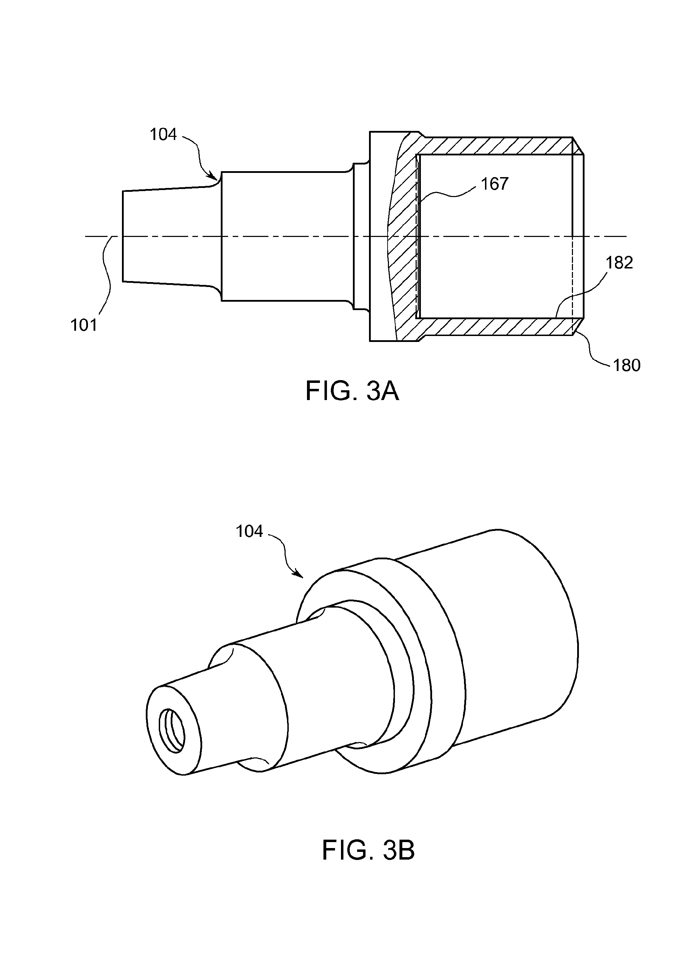

Figs. 3A-3B disclose the second segment 104 of Figs. 1A and 1B in more detail. Fig. 3A is a partially cutaway schematic drawing that indicates the mating surface 180. The female sleeve portion 182 is also shown. Fig. 3B is a perspective view of the second segment 104. In an embodiment, the second segment 104 is a generally cylindrical body having a longitudinal axis 101. The female sleeve portion 182 is disposed at one end of the second segment. The sleeve portion is coaxial with the axis 101, and defines an inner diameter dimensioned to receive the male portion 154 of the first segment 102, e.g., the male portion 154 may have a diameter that is slightly smaller than the inner diameter of the female sleeve portion to form an interference/friction fit with the female sleeve portion. In an embodiment, the mating surface 180 may comprise a distal, annular rim or edge of the female sleeve portion 182, which is frustoconical in shape. The mating surface 156 of the first segment 102 and the mating surface 180 of the second segment 104 can contact each other when the first and second segments are received together in an assembled form. The second segment 104 may further comprise an intermediate body portion, having a diameter smaller than that of the outer diameter of the female sleeve portion, and a second end body portion having a diameter smaller than the diameter of the intermediate body portion and the female sleeve portion. The intermediate body portion is adjacent to the female sleeve portion and coaxial therewith (and thereby also with the axis 101), and the second end body portion is adjacent to the intermediate body portion and coaxial therewith (and thereby also with the axis 101). The female sleeve portion, intermediate body portion, and second end body portion may be integral, that is, formed from a single, continuous piece of material or otherwise permanently connected or attached together. The second end body portion of the second segment may be provided with a threaded (or other) end aperture, coaxial with the axis 101 or otherwise, for receiving a connection member.

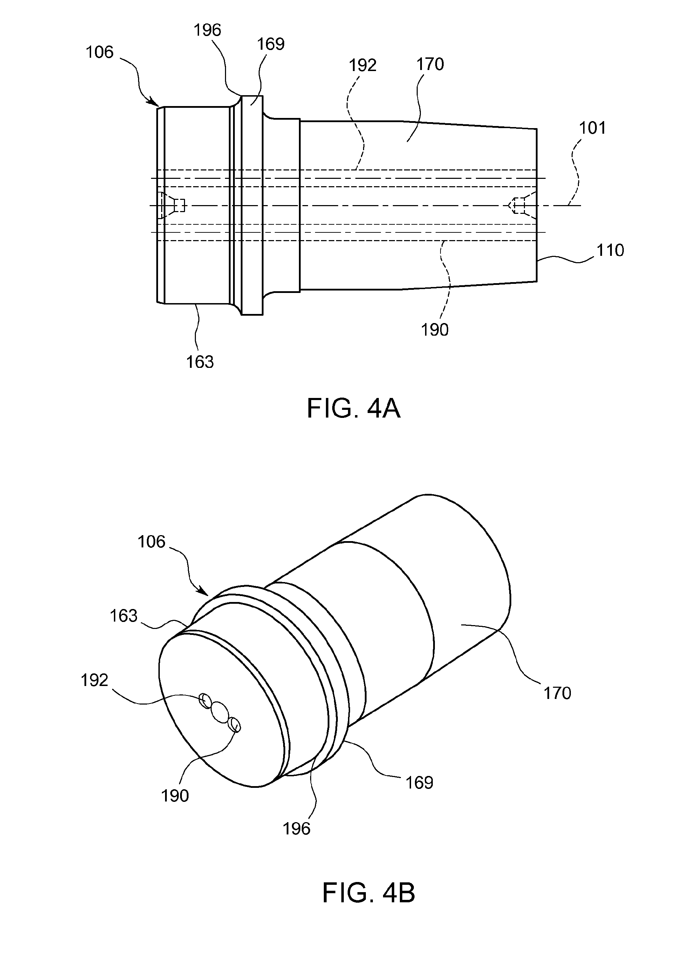

Figs. 4A-4B disclose the third segment 106 of Figs. 1A and 1B in more detail. Fig. 4A is a schematic side view of the third segment, and dashed lines indicate holes or apertures that define a portion of the flow path as well as ingress/egress ports 190, 192 that couple to the ingress/egress apertures 160, 162 of the first segment. Optional threaded boltholes are indicated but not provided reference numbers. In an embodiment, the third segment 106 is a generally cylindrical body having a longitudinal axis 101. The body of the third segment 106 may include a cylindrical male portion 163 that is dimensioned to be received in the female sleeve portion 161 of the second end 152 of the first segment 102, e.g., the male portion 163 may have a diameter that is slightly smaller than the inner diameter of the female sleeve portion 161 of the first segment 102 to form an interference/friction fit with the female sleeve portion. The body of the third segment 106 may further include an intermediate lip portion 169 and a second end body portion 170. The intermediate lip portion 169 is adjacent to the third segment male portion 163, and is generally cylindrical, with a diameter greater than the third segment male portion. The second end body portion 170 of the third segment is adjacent to the intermediate lip portion 169, and is generally cylindrical, with a diameter approximately the same as or slightly smaller than the third segment male portion. The third segment male portion, intermediate lip portion, and second end body portion are coaxial with one another, and may be integral, that is, formed from a single, continuous piece of material or otherwise permanently connected or attached together. The mating surface 196 of the third segment (i.e., the fourth mating surface) is visible in both Figs. 4A and 4B. The mating surface 196 may comprise a frustoconical surface transitioning between the male portion 163 and the intermediate lip portion 169 of the third segment. The second end body portion of the third segment may be provided with a threaded (or other) end aperture, coaxial with the axis 101 or otherwise, for receiving a connection member.

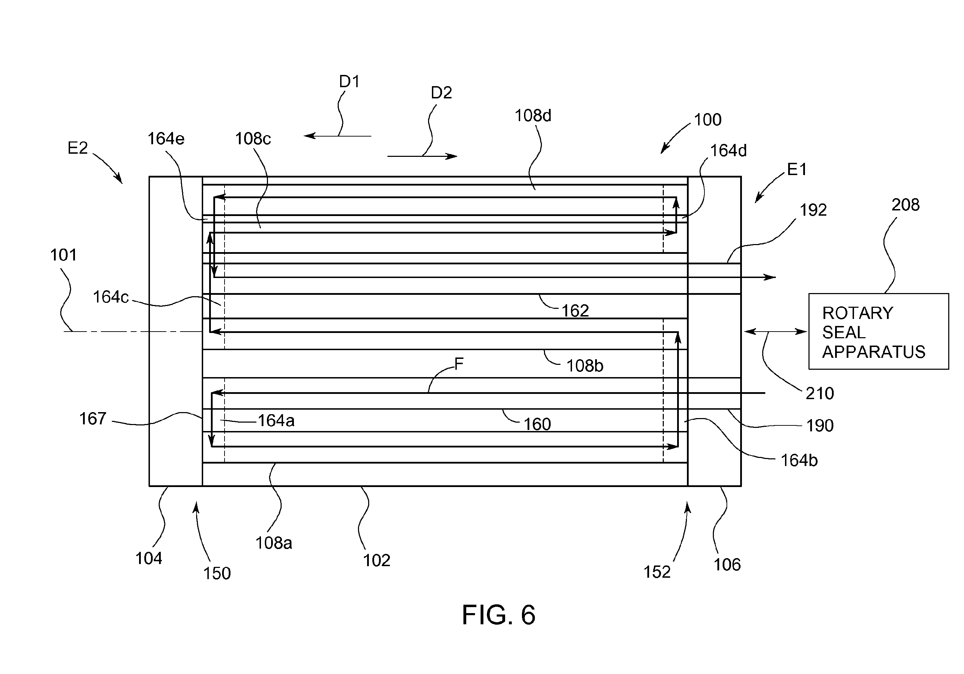

Fig. 6 is a diagram of fluid flow through the assembly of Figs. 1A-1B, according to an embodiment of the invention. (Fig. 6 is in schematic form, and is not to scale.) As indicated, once the first segment 102, second segment 104, and third segment 106 are assembled, for example, as shown in Figs. 1A-1B, fluid "F" is flowed through one of the ingress/egress ports 190, 192 of the third segment 106 (say, for example, the port 190), as provided from a rotary seal apparatus 208 that is operably connected to the system 100. (The operable connection between the apparatus 208 and the system 100, for flow of fluid therebetween, is shown schematically by arrow 210.) The fluid F flows from the port 190, through an ingress aperture 160 in the first second 102 that is aligned with the port 190, axially down the length of the first segment 102 through the aperture 160, and to an end groove 164a that connects the end of the aperture 160 with another aperture 108a. The fluid flow path at and along the end groove 164a (and similarly with other end grooves) may be defined in part by a plate structure 202 (not shown in this figure) and/or by the bottom 167 of the female sleeve portion 182 of the second segment 104 that abuts the first end 150 of the first segment 102 when the first end is received in the female sleeve portion 182. That is, the fluid F passes from the aperture 160 and is guided by the end groove 164a and plate structure and/or second segment 104 to the next aperture 108a. The fluid F flows back down the length of the first segment through the next aperture 108a, to an end groove 164b at the second end 152 of the first segment 102, back through another aperture 108b, and so on, in a serpentine path (indicated by the bold arrows labeled as fluid F) through the first segment until reaching an egress aperture 162 and the egress port 192 of the third segment 106.

In an embodiment, the plurality of apertures 160, 162, 108 that extend through the first segment 102 are an even numbered plurality of apertures, with half of the plurality defining a portion of the flow path for flow of the fluid through the first segment axially in one direction "D1", and the other half defining a portion of the flow path for flow of the fluid through the first segment 102 axially in an opposite direction "D2". For example, Fig. 6 illustrates six total apertures 108a-108d, 160, 162, three of which (160, 108b, 108d) define a portion of the flow path for flow of the fluid F through the first segment axially in the direction D1 and three of which (162, 108a, 108c) define a portion of the flow path for flow of the fluid F through the first segment 102 axially in the opposite direction D2, Although Fig. 6 illustrates six total apertures, there may be more than six total or fewer than six total axial apertures in the first segment 102.

In an embodiment, each aperture 108, 160, 162 in the first segment defines an uninterrupted portion of the fluid flow path that extends generally from one end 150 of the first segment to the other end 152 of the first segment, wherein "uninterrupted" means that there are no connections with other fluid passageways along the aperture except at the ends of the aperture that respectively lie at or proximate to the ends 150, 152 of the first segment 102. In another embodiment, the flow path of fluid through the first segment, when the first segment is assembled to the second and third segments, is non-repeating, meaning that the apertures and end grooves are arranged sequentially, one after the other, so that each unit of fluid does not loop back and/or encounter and mix with fluid elsewhere in the first segment. In an embodiment, each of the plurality of apertures is about linear.

The system that includes the embodiment of the invention illustrated in Figs. 1A-6 has a dimensional envelope of 66"x33.7"x34.4" (LxHxW), without a connection box, and a horsepower (HP) rating of about 1,150. During use, the noise level is about 78 decibel (dB), which is about 19 to 20 percent less than other currently available motors under conditions that are otherwise the same.

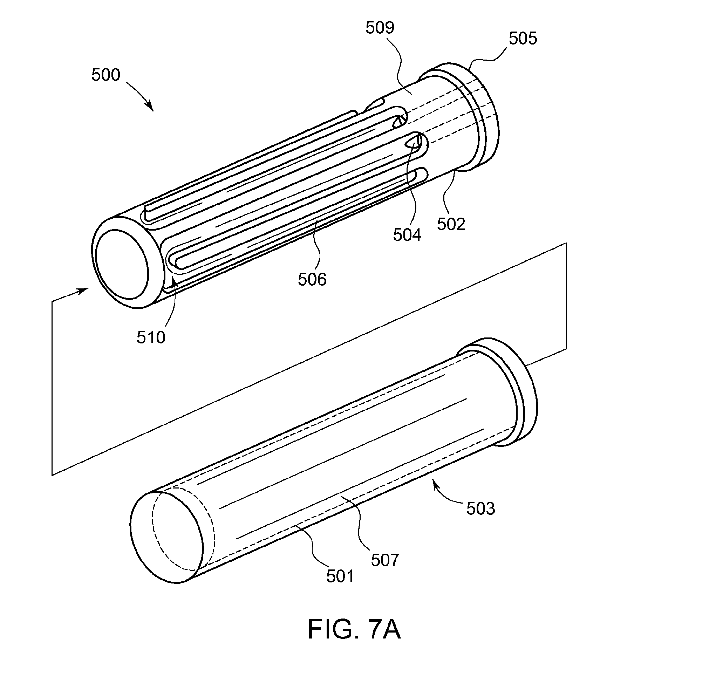

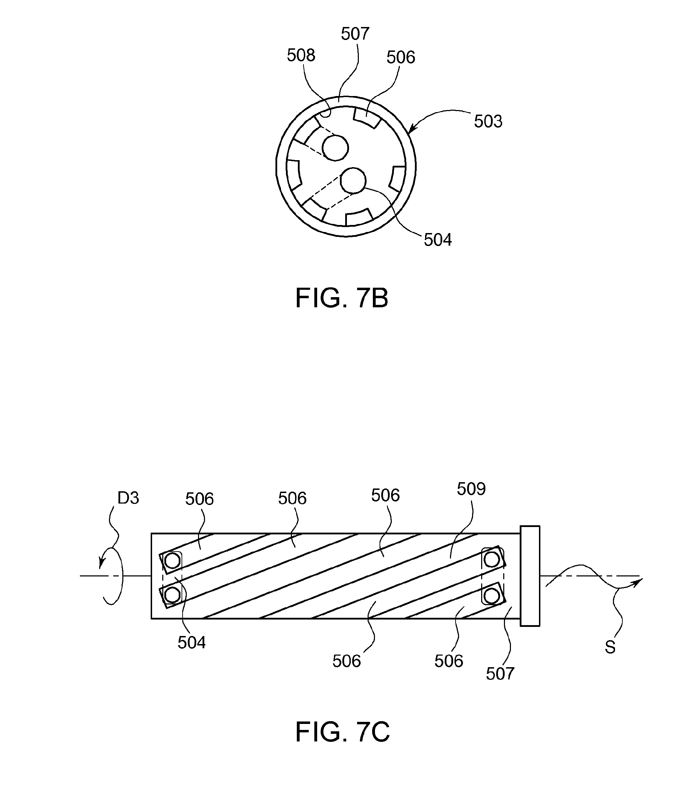

Figs. 7A and 7B illustrate a system 500 that includes embodiments of the invention. The system includes a shaft 502 and a sleeve 503. Channels 506 are formed in the outward facing surface of the shaft 502. The channels 506 are generally axial, meaning each extends along the length of the shaft 502 from one end of the shaft towards the other end of the shaft. Apertures 504 extend from one end through the shaft body to communicate with a corresponding axial channel 506; that is, each aperture 504 starts at a distal end 505 of the shaft body, extends through the shaft body, and ends at an end of one of the channels 506. The apertures 504 thereby function to provide an interior fluid flow path between the end 505 of the shaft body and the channels 506 (e.g., similar in function to apertures 160, 162 in the embodiment of Figs. 1A-6). When the sleeve 503 is placed over the shaft 502, the channels 506 are enclosed to define a flow path, as shown in Fig. 7B. The flow path travels to and fro to increase the opportunity for heat transfer. The sleeve 503 may comprise a cylindrical member having a cylindrical, longitudinal bore 508 with a diameter that is slightly larger than the outer diameter of the shaft 502 in the region of the channels 506, for a friction/interference between the sleeve and shaft when the sleeve is disposed over the shaft.

In an embodiment, with reference to Fig. 7C, each of the plurality of channels 506 is defined by the outward facing surface 509 of the first segment shaft 502. Additionally, each of the channels 506 defines a spiral "S" that turns in a defined direction relative to the direction D3 the rotor rotates during a power generation mode (when the shaft used as part of a rotor assembly in a generator). A shaft sleeve is operable to fit over and around the first segment shaft 502 to close off an open side of each of the channels to further define portions of the flow path (similar to sleeve 503 shown in Figs. 7A-7B). The ends of the channels 506 may be interconnected by providing apertures 504, or through the provision of radial grooves 510 similar to what it shown in Fig. 7A.

Embodiments of the invention may be useful in mud pumps, draw works, and top drives for the oil and gas industry. For a top drive application, the operational parameter (e.g., sensed by the sensor system) may include sustained use at 1000 revolutions per minute (RPM), or at zero RPM if the bit crashes or the drill is seized. The system may operate at continuous torque for drilling and max torque for break out/make up. For the draw works application, the operational parameters may include less than 100 RPM during drilling operations, but zero to 3000 RPM during break out/make up and where maximum torque is needed. For a mud pump application, the operational parameter may comprise about 1000 to 1100 RPM continuous use, and the torque range is dynamic based on the environmental considerations.

Other factors can affect and/or influence design choices for a motor that includes the inventive system. For example, the diameter of the shaft can be selected to increase the surface area for heat transfer. Similarly, the diameter of the apertures can control the volume flow through the apertures, and thus the heat carrying capacity. The number of apertures, and the distance of each aperture from the outward facing surface of the shaft, can affect the efficiency of the thermal management system. Externally, the flow rate of the fluid, e.g., coolant, and the fluid composition can also affect the heat removal rate. The rotary union seal can be selected based on operational parameters, as well. The smaller the rotary union seal, the longer the life of the seal.

Another effect noted is that the design, such as the embodiment disclosed with reference to Figs. 1A-6, greatly and positively affects the ability of the rotor to handle flexion stresses. The relatively effective thermal rejection rate of the rotor, optionally combinable with a fluid-temperature-controlled stator, allows for effective coefficient of thermal expansion (CTE) control, as well as reduced stress otherwise caused by thermal cycling and temperature embrittlement.

The various mating surfaces may be shaped or otherwise configured in manners other than as described herein and shown in the drawings, to provide different sealing/mating characteristics as may be desired for a particular implementation of an embodiment of the invention.

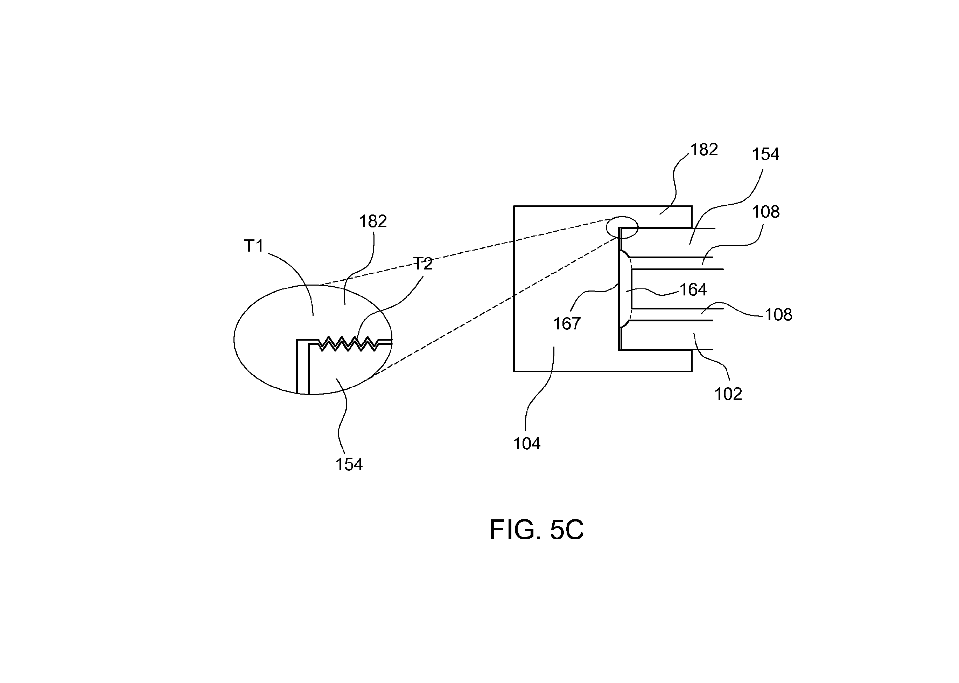

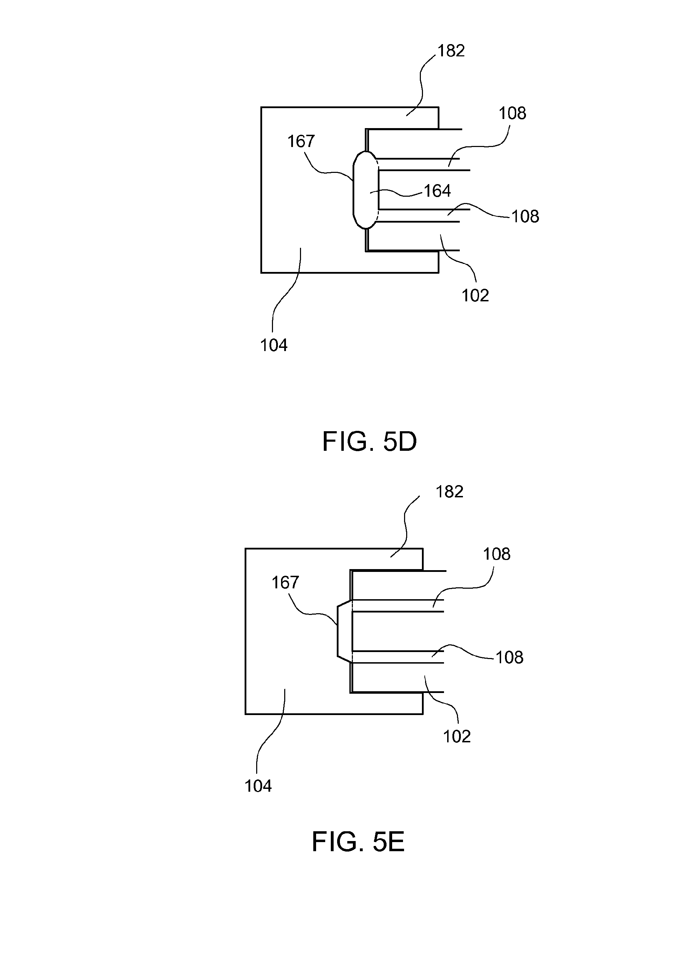

In another embodiment, the second segment 104 has at least a portion of a surface 167 that defines an end groove or end channel 164 that is configured to communicate with two or more of the first segment apertures 108. The end groove or end channel 164 is further configured to allow fluid communication between the two or more of the first segment apertures and to extend the flow path to create a first flow path portion in one axial direction, a redirection of the flow path direction at the end groove or end channel, and a second flow path portion in a different direction than the first flow path portion through another of the first segment apertures. The surface 167 of the second segment 104 may solely define end grooves or end channels that align with respective apertures in the first segment (Fig. 5E), i.e., there are no end grooves in the first segment end 150, or the surface 167 may define a planar surface that seals end grooves formed in the end 150 of the first segment (Fig. 5C), or the surface 167 may define end grooves or end channels that align with end grooves in the end 150 of the first segment (Fig. 5D).

In an embodiment, with reference to the detail view portion of Fig. 5C, an outward facing surface of the male portion 154 of the first segment 102 and an inward facing surface of the female sleeve portion 182 of the second segment 104 are tapped (as at "T1") so as to be able to screw the first segment 102 to the second segment 104. The screw threads "T2" of the tapping may be wound such that during use of the system as a rotor, torque provided through the second segment tightens the connection of the first and second segments.

With reference to Fig. 1C as an example, another embodiment relates to a motor or generator electrical device 300. The device 300 comprises a rotor 302 and a stator 304 that is in operable communication with the rotor 302. The rotor 302 may comprise, at least in part, a system as shown in any of Figs. 1A, 1B, and 2A-7C, or as otherwise described herein, the system generally including a first segment 102, a second Segment 104, and a third segment 106 that are secured to each other in assembled form. In other words, the three segments 102, 104, 106 are assembled together to form part of the rotor 302. Other operable parts of the electrical device 300 are not shown, but could comprise bearings and other support structures, magnets, electrical connections, and the like. Rotor windings 306 are shown schematically in Fig. 1C as an example. Of course, the embodiment of Fig. 1C is not limited to electrical devices with rotor windings, and the windings are shown merely for illustrative purposes, as one type of electrical device component that might additionally be found on an electrical device. As another example, if the electrical device 300 is a permanent magnet motor, the electrical device may further comprise one or more permanent magnets 308.

As noted above, and again with reference to Fig. 1C, the assembly can include a sensor system 310. That is, the electrical device 300 may be used in conjunction with a sensor system 310. The sensor system 310 can sense one or more operational parameters or other parameters 309 of the electrical device 300 (using one or more sensors 311 or otherwise), the parameters selected from temperature, torque, pressure, speed, location, lubricity/lubrication quality, lubricant metal content, electromagnetic interference (EMI) profile, vibration, water content, or pressure. The sensor system 310 can communicate the sensed parameter, or information indicative thereof, to a control unit 312. The control unit 312 can be proximate the assembly, or the control unit can be located remote from the assembly. The sensed parameter, or information related thereto, can be communicated to a data center 314 whereupon diagnostic and/or prognostic analysis is performed based on the sensed parameter information. A corrective action is controllably initiated in response to the sensed parameter being in, or outside of, a determined range of values.

With reference again to Fig. 6, another embodiment relates to a thermally manageable system 100. The system 100 comprises a shaft body (e.g., 102, 104, 106) having a longitudinal axis 101 and first and second ends E1, E2. The system further comprises a flow path F defined by a plurality of interconnected apertures 160, 162, 108 formed in the shaft body and extending axially along at least a part of the length of the shaft. The flow path starts at the first end E1 of the shaft body (e.g., as at 190), extends down through a first of the apertures 160 towards the second end E2 of the shaft body, transitions from the first aperture 160 to a second of the apertures 108a through a first radial connector 164a that interconnects the first and second apertures, and continues down the second aperture 108a back towards the first end E1 of the shaft body. ("Radial" connector refers to a fluid passageway that extends generally normal/radially to the axis 101, as opposed to parallel to the axis.) The flow path continues along successively interconnected radial connectors 164b, 164c, 164d, 164e and apertures 108b, 108c, 108d, 162 until exiting back at the first end of the shaft body. Each of the apertures is uninterrupted, and the flow path is non-repeating. The shaft body may be used as part of a rotor of a motor or generator electrical device that also comprises a stator in operable communication with the rotor.

In the specification and claims, reference will be made to a number of terms have the following meanings. The singular forms "a", "an", and "the" include plural referents unless the context clearly dictates otherwise. Approximating language, as used herein throughout the specification and claims, may be applied to modify any quantitative representation that could permissibly vary without resulting in a change in the basic function to which it is related. Accordingly, a value modified by a term such as "about" is not to be limited to the precise value specified. In some instances, the approximating language may correspond to the precision of an instrument for measuring the value. Similarly, "free" may be used in combination with a term, and may include an insubstantial amount or immaterial structure, while still being considered free of the modified term. The terms "first," "second," and "third," etc., are used merely as labels to distinguish different elements from one another, and are not intended to impose numerical requirements on their objects, a particular order or quantify, or otherwise, unless specified explicitly.

As used herein, the terms "may" and "may be" indicate a possibility of an occurrence within a set of circumstances; a possession of a specified property, characteristic or function; and/or qualify another verb by expressing one or more of an ability, capability, or possibility associated with the qualified verb. Accordingly, usage of "may" and "may be" indicates that a modified term is apparently appropriate, capable, or suitable for an indicated capacity, function, or usage, while taking into account that in some circumstances the modified term may sometimes not be appropriate, capable, or suitable. For example, in some circumstances an event or capacity can be expected, while in other circumstances the event or capacity cannot occur - this distinction is captured by the terms "may" and "may be."

The embodiments described herein are examples of articles, compositions, and methods having elements corresponding to the elements of the invention recited in the claims. This written description may enable those of ordinary skill in the art to make and use embodiments having alternative elements that likewise correspond to the elements of the invention recited in the claims. The scope of the invention thus includes articles, compositions and methods that do not differ from the literal language of the claims, and further includes other articles, compositions and methods with insubstantial differences from the literal language of the claims. While only certain features and embodiments have been illustrated and described herein, many modifications and changes may occur to one of ordinary skill in the relevant art. The appended claims cover all such modifications and changes.

## Claims

1. A thermally manageable system, comprising:
a first segment (102, 502) that is elongate defining an axis, having a proximate first end and a distal second end, and the first segment having:
an outward facing surface (509) that defines a plurality of channels (506), or
an inward facing surface that defines a plurality of apertures, the channels (506) or apertures extending axially from about the first end (150) to about the second end (152) of the first segment (102, 502),
and the plurality of channels (506) or the plurality of apertures define at least a portion of a flow path, and the first segment (102, 502) having a first mating surface at or near the first end (150) and a second mating surface at or near the second end (152);
a second segment (104) having a third mating surface that is securable to the first mating surface; and
a third segment (106) having a fourth mating surface that is securable to the second mating surface, and having an ingress and an egress (160, 162, 504) for a fluid that each communicate with at least a respective one of the plurality of channels (506) or the plurality of apertures, and
the first (102, 502), second (104) and third (106) segments forming a rotatable shaft for the rotor of an electric machine that is subjectable to a thermal load, and the flow path is configured to direct a flow of the fluid to manage or control the thermal load to which the rotatable shaft is subject, **characterized in that** each of the plurality of channels (506) is defined by the outward facing surface (509) of the first segment (102, 502), and each of the channels (506) defines a spiral that turns in a defined direction relative to the direction the rotor rotates during a power generation mode while used in a generator, and further comprising a shaft sleeve (503) operable to fit over and around the first segment (102, 502) to close off an open side of each of the channels to further define portions of the flow path.

2. The system as defined in claim 1, wherein after securing the first segment to the second and third segments, a fluid may be urged along the flow path to travel from the third segment through the first segment, then through the second segment, then again through the first segment, and then again through the third segment.

3. The system as defined in claim 1, wherein the first, second and third segments are weldable, and capable of being secured to each other via welding at the mating surfaces.

4. The system as defined in claim 1, wherein the first, second and third segments form a rotor for use in an electric device when secured through their respective mating surfaces.

5. The system as defined in claim 1, wherein the plurality of apertures that extend through the first segment are an even numbered plurality of apertures with half of the plurality defining a portion of the flow path for flow of a fluid therethrough axially in one direction, and the other half defining a portion of the flow path for flow of the fluid therethrough axially in an opposite direction.

6. The system as defined in claim 1, further comprising a coating or layer disposed along the flow path that protects the first second and/or third segment from corrosion, pitting, abrasion, scoring, fouling, scaling, or wear, and/or facilitates or modifies a flow of fluid that travels along the flow path.

7. The system as defined in claim 1, wherein the first segment has at least a portion of a surface at an end of the first segment that defines a groove, channel or aperture configured to allow fluid communication between two or more of the first segment apertures and to extend the flow path to create a first flow path portion in one axial direction, a redirection of the flow path direction at the groove, channel, or aperture defined at the first segment end, and a second flow path portion in a different direction than the first flow path portion through another of the first segment apertures.

8. The system as defined in claim 7, further comprising at least one plate structure, wherein:
the plate structure can be secured to the end of the first segment to seal the flow path at the groove, channel, or aperture, and the plate structure is configured to at least partially reside in the groove, channel, or aperture; or
the plate structure can be secured to the end of the first segment to cover a plurality of grooves, channels, or apertures defined by the surface of the end of the first segment, so as to seal all of the portions of the flow path or flow paths defined by the grooves, channels, or apertures,

9. The system as defined in claim 1, wherein the second segment has at least a portion of a surface that defines an end groove or end channel that is configured to communicate with two or more of the first segment apertures, and further configured to allow fluid communication between the two or more of the first segment apertures and to extend the flow path to create a first flow path portion in one axial direction, a redirection of the flow path direction at the end groove or end channel, and a second flow path portion in a different direction than the first flow path portion through another of the first segment apertures.

10. The system as defined in claim 1, wherein the second segment has a female sleeve portion and wherein the first segment first end that has a male portion configured to be received in the sleeve portion of the second segment.

11. The system as defined in claim 10, wherein the first mating surface of the first segment and the third mating surface of the second segment contact each other when the first and second segments are received together in an assembled form, and the first and third mating surfaces are proximate a distal portion of the second segment sleeve portion.

12. A motor or generator electrical device, comprising:
a rotor that comprises the system as defined in claim 1 in an assembled form and wherein the first segment, second segment, and third segment are secured to each other; and a stator in operable communication with the rotor.

## Patentansprüche

1. Thermisch regelbares System, das Folgendes umfasst:
ein erstes Segment (102, 502), das länglich ist, wobei es eine Achse definiert, ein proximales erstes Ende und ein distales zweites Ende hat und wobei das erste Segment Folgendes aufweist:
eine nach außen zeigende Fläche (509), die mehrere Kanäle (506) definiert, oder
eine nach innen zeigende Fläche, die mehrere Öffnungen definiert, wobei sich die Kanäle (506) oder die Öffnungen in Axialrichtung von um das erste Ende (150) bis um das zweite Ende (152) des ersten Segments (102, 502) erstrecken und die mehreren Kanäle (506) oder die mehreren Öffnungen wenigstens einen Abschnitt einer Strömungsbahn definieren und das erste Segment (102, 502) eine erste Passfläche an oder nahe dem ersten Ende (150) und eine zweite Passfläche an oder nahe dem zweiten Ende (152) hat,
ein zweites Segment (104), das eine dritte Passfläche hat, die an der ersten Passfläche befestigt werden kann, und
ein drittes Segment (106), das eine vierte Passfläche hat, die an der zweiten Passfläche befestigt werden kann, und einen Einlass und einen Auslass (160, 162, 504) für ein Fluid hat, die jeweils mit wenigstens einem jeweiligen der mehreren Kanäle (506) oder der mehreren Öffnungen in Verbindung stehen, und
wobei das erste (102, 502), das zweite (104) und das dritte (106) Segment eine drehbare Welle für den Rotor einer Elektromaschine bilden, die einer thermischen Belastung ausgesetzt werden kann, und die Strömungsbahn dafür konfiguriert ist, einen Strom des Fluids zu leiten, um die thermische Belastung, der die drehbare Welle ausgesetzt ist, zu regeln oder zu steuern, **dadurch gekennzeichnet, dass**
jeder der mehreren Kanäle (506) durch die nach außen zeigende Fläche (509) des ersten Segments (102, 502) definiert wird und jeder der Kanäle (506) eine Spirale definiert, die sich in einer definierten Richtung im Verhältnis zu der Richtung windet, in der sich der Rotor während eines Energieerzeugungsmodus dreht, während er in einem Generator verwendet wird, und ferner eine Wellenbuchse (503) umfasst, die funktionsfähig ist, um über und um das erste Segment (102, 502) zu passen, um eine offene Seite jedes der Kanäle abzusperren, um ferner Abschnitte der Strömungsbahn zu definieren.

2. System nach Anspruch 1, wobei nach dem Befestigen des ersten Segments an dem zweiten und dem dritten Segment ein Fluid entlang der Strömungsbahn vorangetrieben werden kann, so dass es sich von dem dritten Segment durch das erste Segment, danach durch das zweite Segment, danach wieder durch das erste Segment und danach wieder durch das dritte Segment bewegt.

3. System nach Anspruch 1, wobei das erste, das zweite und das dritte Segment schweißbar sind und über Schweißen an den Passflächen aneinander befestigt werden können.

4. System nach Anspruch 1, wobei das erste, das zweite und das dritte Segment einen Rotor zur Verwendung in einer elektrischen Vorrichtung bilden, wenn sie durch ihre jeweiligen Passflächen befestigt sind.

5. System nach Anspruch 1, wobei die mehreren Öffnungen, die sich durch das erste Segment erstrecken, eine geradzahlige Vielzahl von Öffnungen sind, wobei die Hälfte der Vielzahl einen Abschnitt der Strömungsbahn für den axialen Durchfluss eines Fluids durch dieselbe in einer Richtung definiert und die andere Hälfte einen Abschnitt der Strömungsbahn für den axialen Durchfluss des Fluids durch dieselbe in einer entgegengesetzten Richtung definiert.

6. System nach Anspruch 1, das ferner eine entlang der Strömungsbahn angeordnete Beschichtung oder Lage umfasst, die das erste, das zweite und/oder das dritte Segment vor Korrosion, Lochfraß, Abrieb, Riefenbildung, Verkrustung, Kesselsteinbildung oder Verschleiß schützt und/oder einen Durchfluss von Fluid, das sich entlang der Strömungsbahn bewegt, erleichtert oder modifiziert.

7. System nach Anspruch 1, wobei das erste Segment wenigstens einen Abschnitt einer Fläche an einem Ende des ersten Segments hat, der eine Rinne, einen Kanal oder eine Öffnung definiert, dafür konfiguriert, eine Fluidverbindung zwischen zwei oder mehr von den Öffnungen des ersten Segments zu ermöglichen und die Strömungsbahn auszudehnen, um einen ersten Strömungsbahnabschnitt in einer axialen Richtung, eine Umleitung der Strömungsbahnrichtung an der Rinne, dem Kanal oder der Öffnung, die an dem Ende des ersten Segments definiert sind, und einen zweiten Strömungsbahnabschnitt in einer anderen Richtung als der erste Strömungsbahnabschnitt durch eine andere der Öffnungen des ersten Segments zu schaffen.

8. System nach Anspruch 7, das ferner wenigstens eine Plattenstruktur umfasst, wobei:
die Plattenstruktur an dem Ende des ersten Segments befestigt werden kann, um die Strömungsbahn an der Rinne, dem Kanal oder der Öffnung abzudichten, und die Plattenstruktur dafür konfiguriert ist, wenigstens teilweise in der Rinne, dem Kanal oder der Öffnung zu liegen, oder
die Plattenstruktur an dem Ende des ersten Segments befestigt werden kann, um mehrere durch die Fläche des Endes des ersten Segments definierte Rinnen, Kanäle oder Öffnungen abzudecken, um so alle Abschnitte der durch die Rinnen, Kanäle oder Öffnungen definierten Strömungsbahn oder Strömungsbahnen abzudichten.

9. System nach Anspruch 1, wobei das zweite Segment wenigstens einen Abschnitt einer Fläche hat, der eine Endrinne oder einen Endkanal definiert, die dafür konfiguriert sind, mit zwei oder mehr der Öffnungen des ersten Segments in Verbindung zu stehen, und ferner dafür konfiguriert sind, eine Fluidverbindung zwischen den zwei oder mehr der Öffnungen des ersten Segments zu ermöglichen und die Strömungsbahn auszudehnen, um einen ersten Strömungsbahnabschnitt in einer axialen Richtung, eine Umleitung der Strömungsbahnrichtung an der Endrinne oder dem Endkanal und einen zweiten Strömungsbahnabschnitt in einer anderen Richtung als der erste Strömungsbahnabschnitt durch eine andere der Öffnungen des ersten Segments zu schaffen.

10. System nach Anspruch 1, wobei das zweite Segment einen Aufnahmebuchsenabschnitt hat und wobei das erste Ende des ersten Segments einen Steckerabschnitt hat, der dafür konfiguriert ist, in dem Buchsenabschnitt des zweiten Segments aufgenommen zu werden.

11. System nach Anspruch 10, wobei die erste Passfläche des ersten Segments und die dritte Passfläche des zweiten Segments einander berühren, wenn das erste und das zweite Segment zusammen in einer montierten Form aufgenommen werden, und die erste und die dritte Passfläche nahe einem distalen Abschnitt des Buchsenabschnitts des zweiten Segments liegen.

12. Elektrische Motor- oder Generatorvorrichtung, die Folgendes umfasst:
einen Rotor, der das System nach Anspruch 1 in einer montierten Form umfasst, und wobei das erste Segment, das zweite Segment und das dritte Segment aneinander befestigt sind, und
einen Stator in funktionsfähiger Verbindung mit dem Rotor.

## Revendications

1. Un système thermiquement gérable, comprenant :
un premier segment (102, 502) qui est allongé définissant un axe, ayant une première extrémité proximale et une seconde extrémité distale, et le premier segment ayant :
une surface orientée vers l'extérieur (509) qui définit une pluralité de canaux (506), ou
une surface orientée vers l'intérieur qui définit une pluralité d'ouvertures, les canaux (506) ou ouvertures s'étendant axialement depuis environ la première extrémité (150) jusqu'à environ la seconde extrémité (152) du premier segment (102, 502),
et la pluralité de canaux (506) ou la pluralité d'ouvertures définissent au moins une partie d'un passage de flux, et le premier segment (102, 502) ayant une première surface de jonction à l'endroit ou près de la première extrémité (150) et une seconde surface de jonction à l'endroit ou près de la seconde extrémité (152) ;
un second segment (104) ayant une troisième surface de jonction qui est fixable à la première surface de jonction ; et
un troisième segment (106) ayant une quatrième surface de jonction qui est fixable à la seconde surface de jonction, et ayant une admission et un échappement (160, 162, 504) pour un fluide qui communiquent chacune avec au moins l'un respectif de la pluralité de canaux (506) ou de la pluralité d'ouvertures, et
les premier (102, 502), second (104) et troisième (106) segments formant un arbre rotatif pour le rotor d'une machine électrique qui peut être soumis à une charge thermique, et le passage de flux est agencé pour diriger un flux du fluide pour gérer ou commander la charge thermique à laquelle l'arbre rotatif est soumis,
**caractérisé en ce que** chacun de la pluralité de canaux (506) est défini par la surface orientée vers l'extérieur (509) du premier segment (102, 502), et chacun des canaux (506) définit une spirale qui tourne dans une direction définie relative à la direction dans laquelle le rotor tourne durant un mode de génération de puissance lorsque utilisé dans un générateur, et comprenant en outre une chemise d'arbre (503) utilisable pour s'ajuster sur et autour du premier segment (102, 502) pour refermer un côté ouvert de chacun des canaux pour définir en outre des parties du passage de flux.

2. Le système tel que défini dans la revendication 1, dans lequel après avoir fixé le premier segment aux second et troisième segments, un fluide peut être poussé le long du passage de flux pour se déplacer depuis le troisième segment à travers le premier segment, ensuite à travers le second segment, ensuite encore à travers le premier segment, et ensuite encore à travers le troisième segment.

3. Le système tel que défini dans la revendication 1, dans lequel les premier, second et troisième segments peuvent être soudés, et sont capables d'être fixés les uns aux autres via un soudage des surfaces de jonction.

4. Le système tel que défini dans la revendication 1, dans lequel les premier, second et troisième segments forment un rotor pour une utilisation dans un dispositif électrique lorsque fixés à travers leurs surfaces de jonction respectives.

5. Le système tel que défini dans la revendication 1, dans lequel la pluralité d'ouvertures qui s'étendent à travers le premier segment sont une pluralité d'ouvertures de nombre pair avec une moitié de la pluralité définissant une partie du passage de flux pour un flux d'un fluide à travers celle-ci axialement dans une direction, et l'autre moitié définissant une partie de passage de flux pour un flux de fluide à travers celle-ci axialement dans une direction opposée.

6. Le système tel que défini dans la revendication 1, comprenant en outre un revêtement ou une couche disposé le long du passage de flux qui protège le premier, second et/ou troisième segment de la corrosion, la piqûre, l'abrasion, l'entaille, la salissure, l'entartrage ou l'usure et/ou facilite ou modifie un flux de fluide qui se déplace le long du passage de flux.

7. Le système tel que défini dans la revendication 1, dans lequel le premier segment a au moins une partie d'une surface à une extrémité du premier segment qui définit une rainure, un canal ou une ouverture agencé pour permettre une communication de fluide entre deux ou plusieurs des ouvertures du premier segment et pour étendre le passage de flux pour créer une première partie de passage de flux dans une direction axiale, une redirection de la direction de passage de flux à la rainure, au canal ou à l'ouverture définie à l'extrémité du premier segment, et une seconde partie de passage de flux dans une direction différente de la première partie de passage de flux à travers une autre des ouvertures du premier segment.

8. Le système tel que défini dans la revendication 7, comprenant en outre au moins une structure de plaque dans lequel :
la structure de plaque peut être fixée à l'extrémité du premier segment pour étanchéifier le passage de flux à la rainure, le canal ou l'ouverture, et la structure de plaque est agencée pour au moins partiellement demeurer dans la rainure, le canal, ou l'ouverture ; ou
la structure de plaque peut être fixée à l'extrémité du premier segment pour couvrir une pluralité de rainures, canaux, ou ouvertures définis par la surface de l'extrémité du premier segment, de façon à étanchéifier toutes les parties du passage de flux ou des passages de flux définis par les rainures, canaux ou ouvertures.

9. Le système tel que défini dans la revendication 1, dans lequel le second segment a au moins une partie d'une surface qui définit une rainure d'extrémité ou un canal d'extrémité qui est agencé pour communiquer avec deux ou plusieurs des ouvertures du premier segment, et agencé en outre pour permettre une communication de fluide entre les deux ou plusieurs des ouvertures du premier segment et pour étendre le passage de flux pour créer une première partie de passage de flux dans une direction axiale, une redirection de la direction de passage de flux à la rainure d'extrémité ou le canal d'extrémité, et une seconde partie de passage de flux dans une direction différente de la première partie de passage de flux à travers une autre des ouvertures du premier segment.

10. Le segment tel que défini dans la revendication 1, dans lequel le second segment a une partie de chemise femelle et dans lequel la première extrémité du premier segment qui a une partie mâle agencée pour être reçue dans la partie de chemise du second segment.

11. Le système tel que défini dans la revendication 10, dans lequel la première surface de jonction du premier segment et la troisième surface de jonction du second segment se touchent l'une l'autre lorsque les premier et second segments sont reçus ensemble dans une forme assemblée, et les première et troisième surfaces de jonction sont proches d'une partie distale de la partie de chemise du second segment.

12. Un dispositif électrique générateur ou moteur, comprenant :
un rotor qui comprend le système tel que défini dans la revendication 1 dans une forme assemblée et dans lequel le premier segment, le second segment et le troisième segment sont fixés les uns aux autres ; et
un stator en communication de fonctionnement avec le rotor.
